# EUROPEAN PATENT APPLICATION

(11) **EP 2 911 423 A1**
(43) Date of publication of application: **26.08.2015**
(21) Application number: 13849317.6
(22) Date of filing: 17.09.2013
(51) Int. Cl.: H04W 4/18, H04L 29/10

(54) **IMPLEMENTATION METHOD AND DEVICE FOR VIRTUAL SOUTHBOUND INTERFACE AND INTERNET OF THINGS MANAGEMENT PLATFORM**

(30) Priority: 22.10.2012 CN 201210404060
(71) Applicant: ZTE Corporation, Shenzhen, Guangdong 518057 (CN)
(72) Inventor: TIAN, Chong, Shenzhen Guangdong 518057 (CN)
(74) Representative: Tischner, Oliver
(86) International application number: PCT/CN2013/083686
(87) International publication number: WO 2014/063543

(57) **Abstract**

Provided are a method and device for implementing a virtual southbound interface and an Internet of Things management platform. By the construction and arrangement of a virtual southbound interface of an Internet of Things management platform, the method allows the Internet of Things management platform to be capable of managing a non-standard terminal which has already been deployed in the present network and has not accessed the Internet of Things management platform. The method includes: a virtual southbound interface module converts a received first message transmitted by a first end into a southbound interface message format and adds a predefined identifier to a format converted first message to generate a second message; the second message is transmitted to a second end; and the second end identifies the predefined identifier and enters into a message processing program after stripping the predefined identifier from the second message. Use of the technical solution of the disclosure can achieve unified access and management for some terminals not supporting a standard protocol.

## Description

### TECHNICAL FIELD

The disclosure belongs to the field of Internet of Things communication, and more particularly relates to a method and device for implementing a virtual southbound interface, and an Internet of Things management platform.

### BACKGROUND

The Internet of Things refers an interconnected network that acquires information of the physical world through deployment of various devices having certain sensing, computing, executing and communication abilities and so on, and implements transmission, coordination and processing of information through networks so as to realize wide-area information exchange between humans and things, and between things.

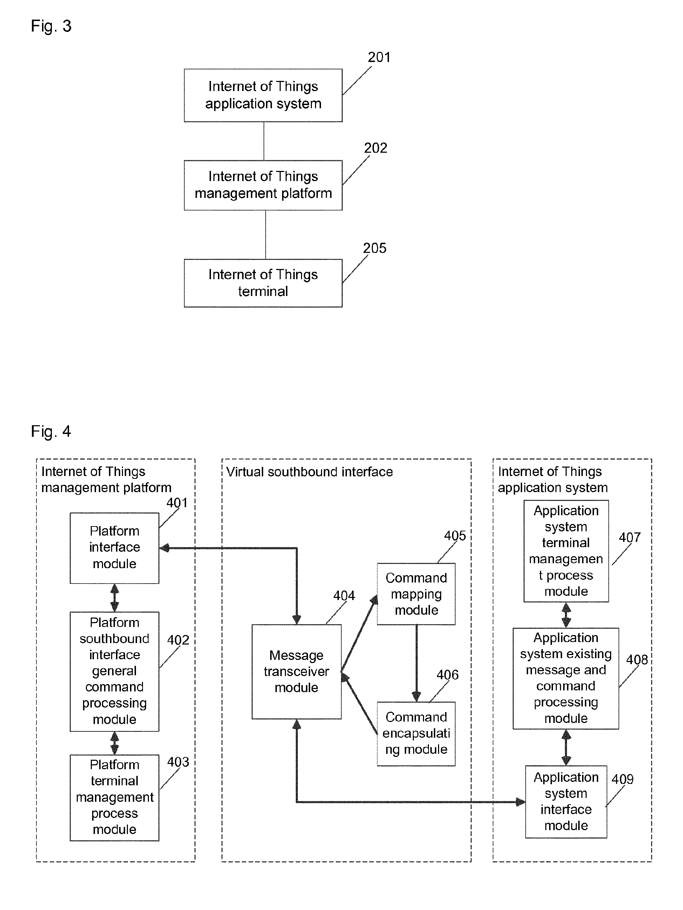

The Internet of Things mainly consists of an Internet of Things management platform, an Internet of Things terminal, an Internet of Things application and other intermediate networks, which may specifically refer to Fig. 3. In Fig. 3, an Internet of Things terminal 205 accesses an Internet of Things application system 201 through an Internet of Things management platform 202, wherein the Internet of Things management platform 202 accesses the Internet of Things terminal 205 through a southbound interface and manages the Internet of Things terminal 205, and provides various information and functions of the Internet of Things terminal 205 to the Internet of Things application system 201 through a northbound interface.

At present, the Internet of Things technology is still at the initial stage of development, and Internet of Things applications and terminals of various industries have been developed and deployed in the present network. Internet of Things terminals and Internet of Things application systems have not accessed a unified Internet of Things management platform, which is not beneficial for acquisition, gathering and management of information of the Internet of Things applications and the Internet of Things terminals, retards the unification and normalization of Internet of Things standards, and hinders the development of the Internet of Things.

Due to the reasons above, it is necessary for various Internet of Things application systems and Internet of Things terminals to access an Internet of Things management platform for unified management. Access of an Internet of Things application system requires a northbound interface with the Internet of Things management platform, which only changes software of the Internet of Things application system. However, if an Internet of Things terminal needs to access the Internet of Things management platform, a large number of terminals that have been deployed in the present network and are being used need to make changes to software or even hardware, which is very difficult and costly with little possibility of implementation.

Therefore, in the prior art, it is necessary to change access ways and protocols for a non-standard Internet of Things terminal which has already been deployed to access an Internet of Things management platform, and there is a problem of access obstruction.

### SUMMARY

The embodiments of the disclosure disclose a method and device for implementing a virtual southbound interface and an Internet of Things management platform to solve the problems in the prior art that it is necessary to change access ways and protocols for a non-standard Internet of Things terminal which has already been deployed to access an Internet of Things management platform and that there is a problem of access obstruction.

To realize the purpose above, according to the first aspect of the embodiments of the disclosure, a method for implementing a virtual southbound interface is provided that adopts the following technical solution:
a method for implementing a virtual southbound interface, applied to an Internet of Things system, includes:
   a virtual southbound interface module converts a received first message transmitted by a first end into a southbound interface message format and adds a predefined identifier to a format converted first message to generate a second message;
   the second message is transmitted to a second end;
   the second end identifies the predefined identifier and enters into a message processing program after stripping the predefined identifier from the second message.

In an embodiment, the first end may be an Internet of Things application system; the second end may be an Internet of Things management platform; before the step that the virtual southbound interface module converts the received first message transmitted by the first end into the southbound interface message format and adds the predefined identifier to a format converted first message, the method may further include: the virtual southbound interface module receives, through the Internet of Things application system, the first message transmitted by the Internet of Things terminal.

In an embodiment, the step that the second end identifies the predefined identifier and enters into the message processing program after stripping the predefined identifier from the second message may include: the second message is received through a northbound interface of the Internet of Things management platform; it is determined according to the predefined identifier that the second message is a virtual southbound interface message; a southbound interface message processing program is entered after stripping the predefined identifier of the second message.

In an embodiment, the first end may be an Internet of Things management platform; the second end may be an Internet of Things application system; before the step that the virtual southbound interface module converts the received first message transmitted by the first end into the southbound interface message format and adds the predefined identifier to a format converted first message, the method may further include: an Internet of Things terminal using a virtual southbound interface and an Internet of Things application system corresponding to the Internet of Things terminal are registered through the Internet of Things management platform,.

In an embodiment, the step that the virtual southbound interface module transmits the second message to the second end may include: the virtual southbound interface module transmits, through the Internet of Things application system corresponding to the second end, the second message to the Internet of Things terminal.

In an embodiment, the step that the second end identifies the predefined identifier and enters into the message processing program after stripping the predefined identifier from the second message may include: the second message is received through the Internet of Things application system; it is determined, according to the predefined identifier that the second message is a virtual southbound interface message; the predefined identifier of the second message is stripped, and an application interface message processing program is entered.

According to the second aspect of the embodiments of the disclosure, a device for implementing a virtual southbound interface is provided that adopts the following technical solution:
the device for implementing a virtual southbound interface, applied to an Internet of Things system, includes: a converting module configured to convert a received first message transmitted by a first end into a southbound interface message format and add a predefined identifier to a format converted first message to generate a second message; a transmission module configured to transmit the second message to a second end; and an identification module configured to identify the predefined identifier and enter into a message processing program after stripping the predefined identifier from the second message.

Preferably, the converting module may include: a reception module configured to receive the first message transmitted by the first end; a converting sub-module configured to convert the received first message transmitted by the first end into the southbound interface message format; and an adding module configured to add the predefined identifier to the format converted first message to generate the second message.

Preferably, the identification module may include: an identification sub-module configured to identify the predefined identifier; and a stripping module configured to enter into the message processing program after stripping the predefined identifier from the second message.

According to the third aspect of the embodiments of the disclosure, an Internet of Things management platform is provided that adopts the following technical solution:
the Internet of Things management platform includes the device for implementing a virtual southbound interface; using the technical solutions of the embodiments of the disclosure, a method for an Internet of Things terminal to access an Internet of Things management platform is redefined; accessing via a virtual logic channel is added besides accessing via a physical channel, i.e. accessing the Internet of Things management platform is realized through an Internet of Things application system so that the Internet of Things management platform can perform, on the Internet of Things terminal, management behaviours including state monitoring, information gathering, and control etc., thus avoiding the obstruction that accessing the Internet of Things management platform requires to change an access way and a protocol of the terminal.

Besides the purposes, characteristics and advantages described above, the embodiments of the disclosure have other purposes, characteristics and advantages. The embodiments of the disclosure will be further described in details below with reference to the accompanying drawings.

### BRIEF DESCRIPTION OF THE DRAWINGS

The accompanying drawings are used for providing further understanding of the disclosure and constitute a part of the application. The exemplary embodiments of the disclosure and the illustrations thereof are used for explaining the disclosure, instead of constituting an improper limitation to the disclosure. In the accompanying drawings:
Fig. 1 shows a flowchart of a method for implementing a virtual southbound interface according to an embodiment of the disclosure;
Fig. 2 shows an architecture diagram of an Internet of Things system to which a method for implementing a virtual southbound interface according to an embodiment of the disclosure is applied;
Fig. 3 shows an architecture diagram of an existing Internet of Things system of the disclosure;
Fig. 4 shows a specific flowchart of a method for implementing a virtual southbound interface according to an embodiment of the disclosure; and
Fig. 5 shows a schematic structural diagram of a device for implementing a virtual southbound interface according to an embodiment of the disclosure.

### DETAILED DESCRIPTION

The embodiments of the disclosure will be described in details below in conjunction with the accompanying drawings. However, the disclosure may be implemented by various different methods defined and covered by the claims.

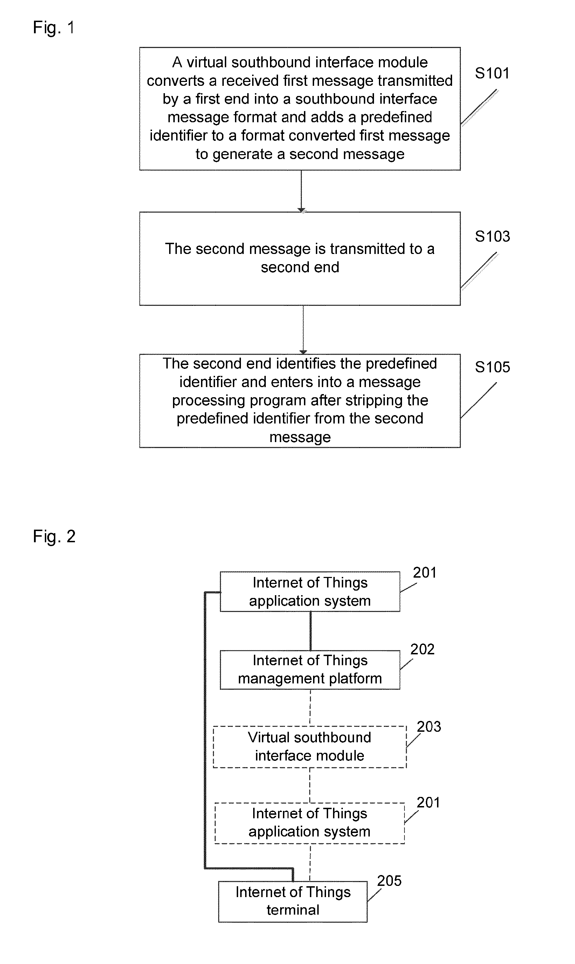

Fig. 1 shows a flowchart of a method for implementing a virtual southbound interface according to an embodiment of the disclosure.

Referring to Fig. 1, the method for implementing a virtual southbound interface may specifically include:
S101, a virtual southbound interface module converts a received first message transmitted by a first end into a southbound interface message format and adds a predefined identifier to a format converted first message to generate a second message;
S103, the second message is transmitted to a second end; and
S105, the second end identifies the predefined identifier and enters into a message processing program after stripping the predefined identifier from the second message.

In the technical solution of the present embodiment, the virtual southbound interface module may exist as a module of the first end, may also exist as a module of the second end, and may further exist as an independent intermediate module. The virtual southbound interface module, existing in any one of the three aforementioned forms, will map and convert the message transmitted by the first end to the second end into the southbound interface message format of an Internet of Things management platform, add the predefined identifier to a format converted first message, and transmit the resulting message to the second end. The second end determines, through identifying the predefined identifier, that the message is a southbound interface message, and then enters into the message processing program after recovering the message. The message processing program includes a message processing program for the southbound interface and a message processing program for an application interface. Specifically, whether the second end enters into the message processing program for the southbound interface and the message processing program for an application interface is determined according to specific conditions.

In the present embodiment, the first end may be an Internet of Things application system, and may be also an Internet of Things management platform. An Internet of Things terminal transmits, through an Internet of Things application system, a message to an Internet of Things management platform. Accordingly, the Internet of Things terminal may also receive, through the Internet of Things application system, a message of the Internet of Things management platform. Therefore, communication between the Internet of Things management platform and the Internet of Things terminal includes an uplink direction and a downlink direction.

In the uplink direction, the Internet of Things terminal transmits a message to the Internet of Things management platform according to the following specific implementation steps:
the Internet of Things terminal first transmits the message to the Internet of Things application system, and then transmits, through the Internet of Things application system, the message to a virtual southbound interface module.

In the uplink direction, a message transmission process of the uplink direction may be learned through an architecture of an Internet of Things system. As shown in Fig. 2, a virtual southbound interface module 203 is added to the architecture of an existing Internet of Things system. All messages are transmitted, through an Internet of Things application system 201 (dash line part), to the virtual southbound interface module 203. After processing the messages, the virtual southbound interface module 203 transmits the messages to an Internet of Things management platform 202.

Processing the messages by the virtual southbound interface module 203 specifically includes: the virtual southbound interface module 203 maps and converts a message that needs to be transmitted to the Internet of Things management platform into a southbound interface message format of the Internet of Things management platform, adds a virtual southbound interface identifier to a format converted message, and then transmits the resulting message to the Internet of Things management platform. The identifier herein may be a virtual southbound interface identifier predefined by the Internet of Things management platform, but is not limited thereto.

The Internet of Things management platform 202 receives the message transmitted by the virtual southbound interface module 203, and learns, through the virtual southbound interface identifier, that the message is a virtual southbound interface message, strips the identifier, and enters into southbound interface message processing to complete a virtual southbound interface message process.

In the downlink direction, the Internet of Things management platform transmits a message to the Internet of Things terminal. An Internet of Things architecture for message transmission may also refer to Fig. 2, and specific implementation steps are as follows:
the Internet of Things management platform 202 registers an Internet of Things terminal 205 using a virtual southbound interface, and a corresponding Internet of Things application system 201;
the Internet of Things management platform 202 first transmits to the virtual southbound interface module 203 a message to be transmitted to the Internet of Things terminal 205;
the virtual southbound interface module 203 maps and converts the message into a message format to be transmitted to the Internet of Things terminal 205, adds a virtual southbound interface identifier to a format converted message, and then transmits the resulting message to the Internet of Things application system 201;
after receiving the message, the Internet of Things application system 201 learns, through the identifier, that the message is a virtual southbound interface message, strips the virtual southbound interface identifier, and transmits the message to the Internet of Things terminal 205.

In the technical solution of the present embodiment, a method for an Internet of Things terminal to access an Internet of Things management platform is redefined. Accessing via a virtual logic channel is added besides accessing via a physical channel, i.e. accessing the Internet of Things management platform is realized through an Internet of Things application system so that the Internet of Things management platform can perform, on the Internet of Things terminal, management behaviours including state monitoring, information gathering, and control etc., thus avoiding the obstruction that accessing the Internet of Things management platform requires to change an access way and a protocol of the terminal.

Fig. 4 shows a specific flowchart of a method for implementing a virtual southbound interface according to an embodiment of the disclosure.

The method for implementing a virtual southbound interface includes an uplink direction and a downlink direction. In the downlink direction, a message is transmitted to an Internet of Things terminal by an Internet of Things management platform. The transmitted message may include a control command (e.g. power off), and a parameter setting (e.g. reporting an interval) etc. while the whole architecture of the Internet of Things system includes: an Internet of Things management platform, a virtual southbound interface module, an Internet of Things application system and an Internet of Things terminal (not shown in the figure).

The Internet of Things management platform may specifically include: a platform interface module 401, a platform southbound interface general command processing module 402, and a platform terminal management process module 403; the virtual southbound interface may specifically include a message transceiver module 404, a command mapping module 405 and a command encapsulating module 406; and the Internet of Things application system may specifically include an application system terminal management process module 407, an application system existing message and command processing module 408, and an application system interface module 409.

In the downlink direction, a process for mutual working of all the modules above is as follows:
Step 1, a management process record of the Internet of Things management platform accesses, through the virtual southbound interface, the Internet of Things terminal;
Step 2, when the Internet of Things management platform needs to perform corresponding management operations on these Internet of Things terminals, or transmit a message, a terminal management process of the Internet of Things management platform notifies the southbound interface general command processing module 402 of the Internet of Things management platform to perform message encapsulation;
Step 3, the platform interface module 401 learns, through a registration record, that the message needs to be transmitted through the virtual southbound interface, and transmits the message to the virtual southbound interface;
Step 4, the message transceiver module 404 receives the message transmitted by the Internet of Things management platform, forwards the message to the command mapping module 405, maps a platform general command into an Internet of Things application system related command, and forwards the command to the command encapsulating module 406;
Step 5, after encapsulating a corresponding Internet of Things application system command message (including addition of an identifier), the command encapsulating module 406 transmits the message to the message transceiver module 404;
Step 6, the message transceiver module 404 transmits the message to the Internet of Things application system;
Step 7, after receiving the message, the application system interface 409 identifies, through the identifier, that the message is transmitted by a virtual interface, and forwards the message to the application system existing message and command processing module 408;
Step 8, the application system existing message and command processing module 408 processes the message, the processed message enters into the application system terminal management process module 407 and is transmitted to the Internet of Things terminal.

In the uplink direction, the message is transmitted by the Internet of Things application system to the Internet of Things management platform. The transmitted message may be state information, e.g. reporting of an event (e.g. an alarm), a state (e.g. an online state or offline state) and a fault etc.

In the downlink direction, a process for mutual working of all the modules above is as follows:
Step 1, the application system terminal management process module 407 transmits, to the application system interface module 409 through the application system existing message and command processing module 408, a message to be uploaded to the Internet of Things management platform;
Step 2, the application system interface module 409 transmits the message to the message transceiver module 404 of the virtual southbound interface;
Step 3, the message transceiver module 404 receives the message transmitted by the Internet of Things application system, forwards the message to the command mapping module 405, maps an existing application system command into a general command of the Internet of Things management platform, and forwards the general command to the command encapsulating module 406;
Step 4, after encapsulating a corresponding Internet of Things management platform general command message (including adding an identifier), the command encapsulating module 406 transmits the message to the message transceiver module 404;
Step 5, the message transceiver module 404 transmits the message to the Internet of Things management platform; the platform interface module 401 identifies, through the identifier, that the message is a virtual southbound interface message, and the message enters into the platform southbound interface general command processing module 402;
Step 6, the platform southbound interface general command processing module 402 processes the terminal message, and performs a corresponding processing process of the platform terminal management process module 403.

Through constructing and setting a virtual southbound interface of an Internet of Things management platform, the disclosure enables the Internet of Things management platform to manage a non-standard terminal which has already been deployed in the present network and has not accessed the Internet of Things management platform, thus realizing unified management for some terminals not supporting a standard protocol.

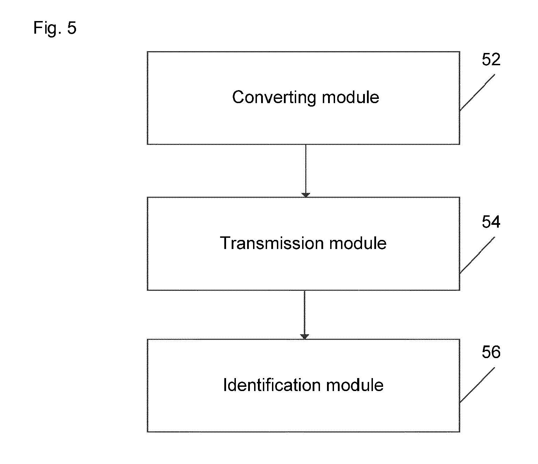

Fig. 5 shows a schematic structural diagram of a device for implementing a virtual southbound interface according to an embodiment of the disclosure.

Referring to Fig. 5, the device for implementing a virtual southbound interface includes: a converting module 52 configured to convert a received first message transmitted by a first end into a southbound interface message format and add a predefined identifier to a format converted first message to generate a second message; a transmission module 54 configured to transmit the second message to a second end; and an identification module 56 configured to identify the predefined identifier and enter into a message processing program after stripping the predefined identifier from the second message.

Preferably, the converting module 52 includes: a reception module (not shown in the figure) configured to receive the first message transmitted by the first end; a converting sub-module (not shown in the figure) configured to convert the received first message transmitted by the first end into the southbound interface message format; and an adding module (not shown in the figure) configured to add the predefined identifier to the format converted first message to generate the second message.

Optionally, the identification module 56 includes: an identification sub-module (not shown in the figure) configured to identify the predefined identifier; and a stripping module (not shown in the figure) configured to enter into the message processing program after stripping the predefined identifier from the second message.

The Internet of Things management platform provided by the disclosure includes the device for implementing a virtual southbound interface.

It may be learned through the technical solutions above that all existing access methods are direct access of Internet of Things terminals. The Internet of Things terminals, accessing an application system directly, generally have independent non-standard protocols with their respective application systems. Based on this current situation, an access way and an access protocol need to be changed at an Internet of Things side in order to change direct access of the Internet of Things terminal to an Internet of Things application system into direct access to an Internet of Things management platform, and such change is difficult and costly. According to a method for implementing a virtual southbound interface of an Internet of Things management platform, which is disclosed by the disclosure, a method for an Internet of Things terminal to access an Internet of Things management platform is redefined; accessing via a virtual logic channel is added besides accessing via a physical channel, i.e. accessing the Internet of Things management platform is realized through an Internet of Things application system so that the Internet of Things management platform can perform, on the Internet of Things terminal, management behaviours including state monitoring, information gathering, and control etc., thus avoiding the obstruction that accessing the Internet of Things management platform requires to change an access way and a protocol of the terminal. The method for implementing a virtual southbound interface of an Internet of Things management platform, which is disclosed by the disclosure, describes a virtual interface providing terminal information and performing terminal control etc., and defines general and user-defined parameters of the interface, thus satisfying access requirements of non-standard terminals of various Internet of Things applications.

What are described above are preferred embodiments of the disclosure. It should be pointed out that, for those of ordinary skills in the art, several improvements and modification may be further made without departing from the principle of the disclosure, and these improvements and modifications may be also regarded as being within the protection scope of the disclosure.

## Claims

1. A method for implementing a virtual southbound interface, applied to an Internet of Things system, comprising:
converting, by a virtual southbound interface module, a received first message transmitted by a first end into a southbound interface message format and adding a predefined identifier to a format converted first message to generate a second message;
transmitting the second message to a second end; and
identifying, by the second end, the predefined identifier, and entering into a message processing program after stripping the predefined identifier from the second message.

2. The method according to claim 1, wherein the first end is an Internet of Things application system; the second end is an Internet of Things management platform; before the converting, by a virtual southbound interface module, a received first message transmitted by a first end into a southbound interface message format and adding a predefined identifier to a format converted first message, the method further comprises:
receiving, by the virtual southbound interface module through the Internet of Things application system, the first message transmitted by the Internet of Things terminal.

3. The method according to claim 2, wherein the identifying, by the second end, the predefined identifier, and entering into a message processing program after stripping the predefined identifier from the second message comprises:
receiving the second message through a northbound interface of the Internet of Things management platform;
determining, according to the predefined identifier, that the second message is a virtual southbound interface message; and
entering into a southbound interface message processing program after stripping the predefined identifier of the second message.

4. The method according to claim 1, wherein the first end is an Internet of Things management platform; the second end is an Internet of Things application system; before the converting, by a virtual southbound interface module, a received first message transmitted by a first end into a southbound interface message format and adding a predefined identifier to a format converted first message, the method further comprises:
registering, through the Internet of Things management platform, an Internet of Things terminal using the virtual southbound interface and an Internet of Things application system corresponding to the Internet of Things terminal.

5. The method according to claim 4, wherein the transmitting, by the virtual southbound interface module, the second message to a second end comprises:
transmitting, by the virtual southbound interface module, the second message to the Internet of Things terminal through the Internet of Things application system corresponding to the second end,.

6. The method according to claim 4, wherein the identifying, by the second end, the predefined identifier, and entering into a message processing program after stripping the predefined identifier from the second message comprises:
receiving the second message through the Internet of Things application system;
determining, according to the predefined identifier, that the second message is a virtual southbound interface message;
stripping the predefined identifier of the second message, and entering into an application interface message processing program.

7. A device for implementing a virtual southbound interface, applied to an Internet of Things system, comprising:
a converting module configured to convert a received first message transmitted by a first end into a southbound interface message format and add a predefined identifier to a format converted first message to generate a second message;
a transmission module configured to transmit the second message to a second end; and
an identification module configured to identify the predefined identifier and enter into a message processing program after stripping the predefined identifier from the second message.

8. The device according to claim 7, wherein the converting module comprises:
a reception module configured to receive the first message transmitted by the first end;
a converting sub-module configured to convert the received first message transmitted by the first end into the southbound interface message format; and
an adding module configured to add the predefined identifier to the format converted first message to generate the second message.

9. The device according to claim 7, wherein the identification module comprises:
an identification sub-module configured to identify the predefined identifier; and
a stripping module configured to enter into the message processing program after stripping the predefined identifier from the second message.

10. An Internet of Things management platform comprising the device for implementing a virtual southbound interface according to any one of claims 7 to 9.
